# EUROPEAN PATENT SPECIFICATION

(11) **EP 1 886 913 B1**
(45) Date of publication and mention of the grant of the patent: **19.10.2011**
(21) Application number: 07012351.8
(22) Date of filing: 25.06.2007
(51) Int. Cl.: B62M 23/02

(54) **Electrically assisted bicycle**
Elektrisch unterstütztes Fahrrad
Bicyclette assistée électriquement

(30) Priority: 11.08.2006 JP 2006219237
(43) Date of publication of application: 13.02.2008
(73) Proprietor: SANYO ELECTRIC CO., LTD., Moriguchi-shi, Osaka 570-8677 (JP)
(72) Inventor: Tanaka, Tatsuaki, Moriguchi-shi Osaka 570-8677 (JP); Shimazu, Masahiro, Moriguchi-shi Osaka 570-8677 (JP)
(74) Representative: TER MEER - STEINMEISTER & PARTNER GbR

(56) References cited:
- EP-A1- 0 798 204
- WO-A1-2006/029514
- FR-A1- 2 727 376
- JP-A- 4 100 790
- US-A- 3 921 745

## Description

### TECHNICAL FIELD

The present invention relates to electrically assisted bicycles having a man-powered drive mechanism using a human drive force, and an electric drive mechanism for driving an electric motor with a drive force in accordance with the human torque of the man-powered drive mechanism.

### BACKGROUND ART

Electrically assisted bicycles are already proposed which are adapted to generate a braking force in a motor on the bicycle upon detecting a braking action, for example, on a downward slope. (Patent Literature 1: JP1992-100790A).

The electrically assisted bicycle of Patent Literature 1 is so designed that a braking force is produced in the motor only when the brake is applied, and until the brake is applied, the motor is unable to produce any braking force and can not be brought into a regenerative state.

Electrically assisted bicycles are accordingly proposed which are adapted to detect the speed of the bicycle and the pedaling force, to control the motor to a regenerative state when detecting a travel on a downward slope in the case where the pedaling force is small relative to the speed, and to thereby charge a battery (Patent Literature 2: JP1997-267790A).

With the electrically assisted bicycle of Patent Literature 2, the pedaling force required for running on level roads are determined in corresponding relation with the speed of the bicycle, and values of pedaling force are stored as regenerative discriminating values. In the case where the actual pedaling force at a certain bicycle speed is smaller than the regenerative discriminating value, the motor is changed over to the regenerative state.

However, when regenerative discriminating values are determined at different bicycle speeds and stored, there arises the problem of necessitating a cumbersome control procedure. If the rider does not weigh much, it appears likely that the actual pedaling force at a certain speed will become smaller than the regenerative discriminating value even while running on a level road, with the result that the motor is changed over to the regenerative state. Conversely, when the bicycle runs with a heavy article placed thereon, the actual pedaling force at a certain speed fails to become smaller than the regenerative discriminating value even while running on a downward slope, and the motor, which should be changed over to the regenerative state, will not be brought into this state, hence the problem of an unreliable change-over to the regenerative state.

The closest prior art, WO 2006/029514 A1 describes an energy management system for motor-assisted user-propelled vehicles. Herein, an electric-motor assisted bicycle comprises an electric motor/generator being mounted on a rear wheel of the bicycle. A battery, designed to supply electric power to the motor and to receive electric power from the motor, is mounted to a frame of the bicycle. A user interface is also fixed to the frame of the bicycle, to enable a user to input or set parameter values, to select, for example, a preprogrammed training program. Herein, an indicator could be provided, to tell the user that he must increase or decrease his own power output to achieve a set of parameter desired values. There is at least one sensor for sensing an actual value for a user related control parameter included in the power management system. Like a heart rate sensor, a user effort sensor like a cyclic user propulsion effort sensor, a breath depth sensor, a breath rhythm sensor, a perspiration sensor, or a blood pressure sensor. In this case, a speed sensor is included, integrated to the electric motor internal construction and connected to the processing unit, additionally to a sensor related to a user control parameter. Speed is a vehicle related control parameter, like vehicle acceleration, pedaling cadence, and battery energy level remaining. A user will input a desired heart rate he wishes to maintain. Herein, the motor used is capable of negative power output, thus the motor may not only reduce the assistance, but even work as a generator, thus offering resistance, or braking, and transforming the braking energy to electric energy used to recharge the battery. If the heart rate is above a desired heart rate, the processing unit will command the motor to increase the power output, thus the heart rate will be reduced to the desired heart rate. In case a cyclist going in a curve and braking in order to maintain a maximum physical stall speed, the motor battery will be recharged if the user sets a maximum speed, as a further control parameter, to be the maximum speed at which he can take the curve. He will then continue pedaling at his ideal operating rhythm, maintaining his heart rate, and the motor/generator will decrease its assistance, maybe even going into generator mode and recharging the battery.

FR 2 727 376 A1 describes a control unit for an electrically assisted bicycle. Herein, an electronically controlled gear is controlled by a micromotor supplied from an electrical source, which is connected to a recharging system. The charging system includes a detector of pedal crank effort of a cyclist. A charger is connected to the detector and is operated when no positive pedaling effort is detected. This may be detected by chain tension. Chain tension may be detected by a spring loaded roller on a frame pivoted arm, connected electrically to the charger. The charger may be an alternator, with friction drive wheel applied to a wheel by a motor when no pedal effort is detected. A safety over-ride circuit may operate the charger, depending on the battery charge state.

EP 0 798 204 A1 describes a regeneration control device for a bicycle with auxiliary motor. Herein, in a bicycle with an auxiliary motor having a drive control means for drive-controlling a motor so as to generate assisting force corresponding to pressing force on a pedal, the bicycle with an auxiliary motor is provided with a bicycle speed detection means for detecting the speed of the bicycle, a pressing force detection means for detecting pressing force on the pedal, and a regeneration control device which judges the necessity of regeneration based on a bicycle speed detected by the bicycle speed detection means and pressing force detected by the pressing force detection means and then changes the motor to a state of regeneration.

US 3,921,745 A describes an electric bicycle. Herein, a bicycle comprises a battery carried by the frame of the bicycle and a direct current motor carried by the frame of the bicycle. A manually operable throttle means is carried by the frame of the bicycle. The bicycle further comprises a variable frequency, variable pulse width controller circuit carried by the frame of the bicycle and being electrically connected to the battery, the direct current motor and to the throttle means for controlling the flow of current from the battery to the motor in response to the throttle means. The throttle and/or brake control may be carried by one of a pedals to be responsive to a foot pressure and may be connected through slip rings and an electrical cable to the motor controller and a motor comprising the direct current motor.

JP 04100790 A describes a manual driving device. Herein, the manual driving force detected signal detected by a load detecting means is compared with set voltage of a setting device in a comparator, and when it is over the set voltage, a switch is closed through an amplifier to connect a clutch. Meanwhile, the signal is passed through an amplifier and a subtructor, difference against a main circuit voltage signal detected at a shunt is obtained, and it is amplified and sent to a gate circuit. The gate circuit changes duty ratio according to the quantity of difference, and sends a gate signal to a switching element to be come on and off. Consequently, the motor driving force according to magnitude of human power is output.

### DISCLOSURE OF THE INVENTION

In view of the foregoing problems, an object of the invention provides is to provide an electrically assisted bicycle having a simplified construction for reliably effecting a change-over to regenerative generation of power.

To fulfill the above object, the present invention provides an electrically assisted bicycle comprising a human power drive mechanism using a human drive force, and an electric drive mechanism adapted to receive power supplied from a battery for driving a motor with a drive force in accordance with a value detected by a torque detector for detecting human torque of the human power drive mechanism, the bicycle being characterized in that the bicycle comprises control means for causing the electric drive mechanism to effect regenerative generation when cranks of the human power drive mechanism are rotated with a number of revolutions up to a predetermined value.

The predetermined value of the number of revolutions of the cranks can be set at substantially zero.

The bicycle is provided with a speed detector for detecting the running speed of the bicycle. The predetermined value of the number of revolutions of the cranks can be set at a number of revolutions smaller than is needed for causing the bicycle to run on a level load at the speed detected by the speed detector.

Preferably, the control means controls the amount of power to be produced by regenerative generation is so controlled that variations in the speed of bicycle are not greater than a specified value.

Preferably, the control means controls the amount of power so that the greater the variation in the bicycle speed, the larger the amount of power to be produced by regenerative generation.

Preferably, the control means effects regenerative generation when the bicycle speed is not smaller than a predetermined value.

Preferably, the bicycle has means for detecting the angle of a downhill, and the control means effects regenerative generation based on the angle detected by the angle detecting means.

Preferably, the bicycle has means for detecting the weight of an article to be placed on the bicycle, and the control means effects regenerative generation based on the an output of the weight detecting means.

According to the present invention, the number of revolutions of the cranks indicates the state of downward slopes, which can therefore be judged with improved accuracy regardless of the weight of the rider or the article to be placed on the bicycle for the regenerative generation of power. This results in the advantages of ensuring comfortable cycling, reducing the frequency of charging and increasing the running distance per charge.

### BRIEF DESCRIPTION OF THE DRAWINGS

FIG. 1 is a block circuit diagram showing an embodiment of the invention.
FIG. 2 is a flow chart of the same.
FIG. 3 is a side elevation of an electrically assisted bicycle of the embodiment.
FIG. 4 is a view in section of a running drive device of the embodiment.
FIG. 5 is a sectional view showing a fixed member and an engaging cam portion of a movable ring.

### BEST MODE OF CARRYING OUT THE INVENTION

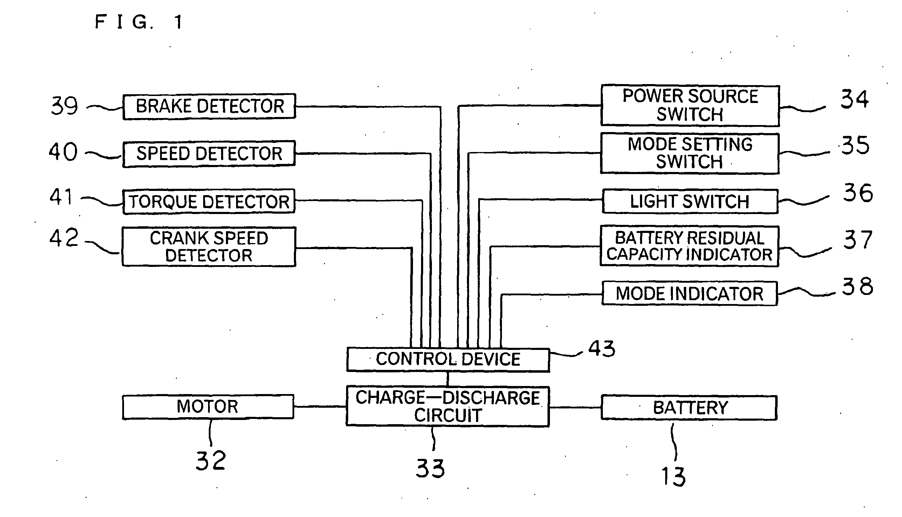

An embodiment of the invention will be described below in detail with reference to FIGS. 1 to 5.

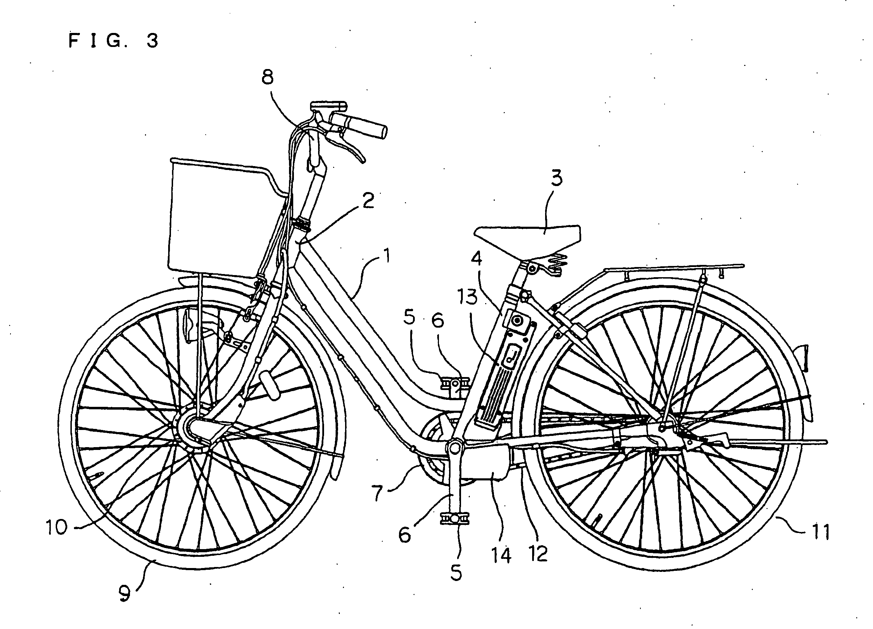

First, the overall construction of an electrically assisted bicycle will be described with reference to FIG. 3.

Indicated at 1 is a main frame, which is connected to a front pipe 2 provided at the front and to a seat tube 4 provided under a saddle 3. The connection between the main frame 1 and the seat tube 4 is provided with cranks 6 each having a pedal 5 attached thereto, and a running drive device 7 to be rotated by the cranks 6.

Indicated at 8 is a handle provided at the upper end of the front pipe 2, and at 9 is a front wheel attached to the lower end of the front pipe 2 and having a hub 10 with an unillustrated motor incorporated therein. The motor drivingly rotates the front wheel 9, thus providing an electric drive mechanism.

A rear wheel 11 is provided with a sprocket (not shown) having a chain 12 reeved therearound and around the running drive device 7. The pedaling force of the rider acting on the pedals 5 is delivered from the running drive device 7 to the sprocket through the chain 12. Thus, a human power drive mechanism is provided for rotating the rear wheel 11.

Indicated at 13 is a battery removably provided between the seat tube 4 and the rear wheel 11, and at 14 is a control box provided at the connection between the main frame 1 and the seat tube 4 and having incorporated therein a control circuit serving as control means. In response to a command from the control circuit, electric power is supplied from the battery 13 to the motor to drive the motor.

In the following description, the term "the direction of forward rotation" refers to the direction of rotation effected when the pedals 5 are stepped on to move the electrically assisted bicycle forward, and by the term "the direction of reverse rotation" is meant the direction of rotation opposite to "the direction of forward rotation."

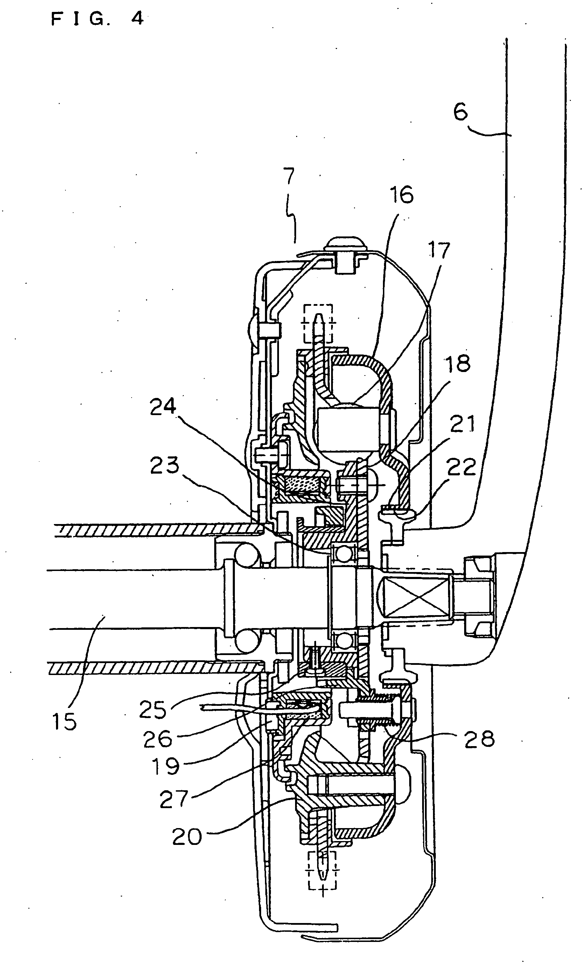

FIG. 4 is a sectional view of the running drive device 7 provided on a crankshaft 15 of the cranks 6 rotatable by pedaling. The drive device 7 comprises a rotating member 16, a sprocket 18 biased by a compression coil spring 17 toward the direction of reverse rotation relative to the rotating member 16 and rotatable by the rotation of the rotating member 17 for rotating the rear wheel 11 through the chain 12, torque sensor means 19 for detecting rotational torque from the difference between the rotating member 16 and the sprocket 18 in phase and a cover member 20 so disposed as to rotate with the rotating member 16 with the sprocket 18 interposed therebetween.

The rotating member 16 is annular and has an inner periphery defining a center hole and provided with inner teeth 21. Meshing with inner teeth 21 is a gear 22 mounted on a side end of the crankshaft 15 of the cranks 6. The crankshaft 15 rotates with the rotating member 16.

The sprocket 18 is fastened with screws to a mount member 24 rotatably supported by a bearing 23 on the crankshaft 15, and has a peripheral toothed portion projecting radially outward beyond the rotating member 16.

The torque sensor means 19 comprises a fixed annular member 25 secured to the mount member 24, a movable ring 26 fitting around the fixed member 25 and movable axially of the crankshaft 15 by the phase difference between the rotating member 15 and the sprocket 18, and a sensor 27 for detecting the amount of axial movement of the movable ring 26 to send a signal to the control circuit.

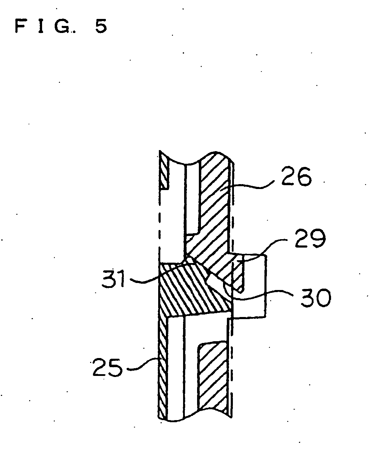

The movable ring 26 can be prepared from a metal, such as aluminum or an aluminum alloy. The movable ring 26 is biased by a spring 28 toward the cover member 20. As shown in FIG. 5, the movable ring 26 has a protrusion 29 and a cam face 30 formed on the protrusion 29. The fixed member 25 has a projection 31 slidable in contact with the cam face 30 of the movable ring 26. The protrusion 29 and the projection 31 provide a cam portion. When a phase difference occurs between the rotating member 16 and the sprocket 18, the movable ring 26 moves axially of the crankshaft 16 while rotating with its cam face 30 in sliding contact with the projection 31 on the fixed member 25 as will be described later.

The sensor 27 comprises a winding (not shown) provided around the movable ring 26 within the range of axial movement of the movable ring 26 and detects variations in the inductance of the winding due to the axial movement of the movable ring 26. The greater the amount of ingress of the ring 26 into the winding, the greater the inductance of the winding. The control circuit detects such variations in the inductance for controlling the motor based on the result detected.

Next, the control circuit will be described with reference to the block diagram shown in FIG. 1.

The motor 32, housed in the hub 10 of the front wheel 9, rotates the front wheel 9 with the power supplied from the battery 13 through a charge-discharge circuit 33, or generates electricity utilizing the rotation of the front wheel 9 and charges the battery 13 through the charge-discharge circuit 33. The state in which the front wheel 9 is rotated with the power supplied from the battery 13 will hereinafter be referred to as the "nongenerative state," while the state in which the battery 13 is charged with the regenerative power produced by the rotation of the front wheel 9 as the "regenerative state. "

Indicated at 34 is a power source switch mounted on a manual controller provided in the vicinity of the handle 8, and at 35 a mode setting switch mounted on the manual controller for selecting one operation mode of "standard" and "autoeconomy." The "standard" mode is a mode wherein no power is produced by regenerative generation, and the "autoeconomy (hereinafter referred to as 'autoeco') mode" is a mode wherein power is produced by regenerative generation. The manual controller has, in addition to the power source switch 34 and the mode setting switch 35, a light switch 36 for controlling the lighting of a head lamp, an indicator 37 for indicating the residual capacity of the battery 13, and a mode indicator 38 for indicating the operation mode selected by the mode setting switch 35.

Indicated at 39 is a brake detector, which brings the motor 32 into the "regenerative state" upon detecting the application of the brake of the bicycle to charge the battery 13. Indicated at 40 is a speed detector for detecting the running speed of the bicycle from the speed of rotation of the motor 32. A torque detector 41 has the sensor 27 for detecting variations in the inductance of the winding to detect the pedaling force acting on the pedals 5. A crank speed detector 42 detects the number of revolutions of the cranks 6 from the output waveform of the sensor 27.

Indicated at 43 is a control unit for receiving signals from the power source switch 34, mode setting switch 35, light switch 36, brake detector 39, speed detector 40, torque detector 41 and crank speed detector 42 to control the charge-discharge circuit 33, light for turning on or off, battery remaining capacity indicator 37 and mode indicator 38.

When the rider starts running by pedaling, the rotating member 16 coupled to the pedals 5 by the cranks 6 acts to rotate, whereas great resistance is offered to the sprocket 18 coupled to the rear wheel 11 by the chain 12. For this reason, the rotating member 15 starts rotation first, compressing the coil spring 17 between the rotating member 16 and the sprocket 18 to produce a phase difference between the rotating member 16 and the sprocket 18.

With an advance of the phase of the rotating member 16 relative to the sprocket 18, the movable ring 26, which is rotatable with the rotating member 16 and movable axially of the crankshaft 15, moves into the winding of the sensor 27 with its cam face 30 brought into sliding contact with the projection 31 of the fixed member 25. The ingress of the movable ring 26 increases the inductance of the winding of the sensor 27. The torque detector 41 detects the variation in the inductance of the winding, consequently causing the control device 43 to control the drive of the motor 32 and adding the assisting power of the motor 32 to the human pedaling force for the travel of the bicycle.

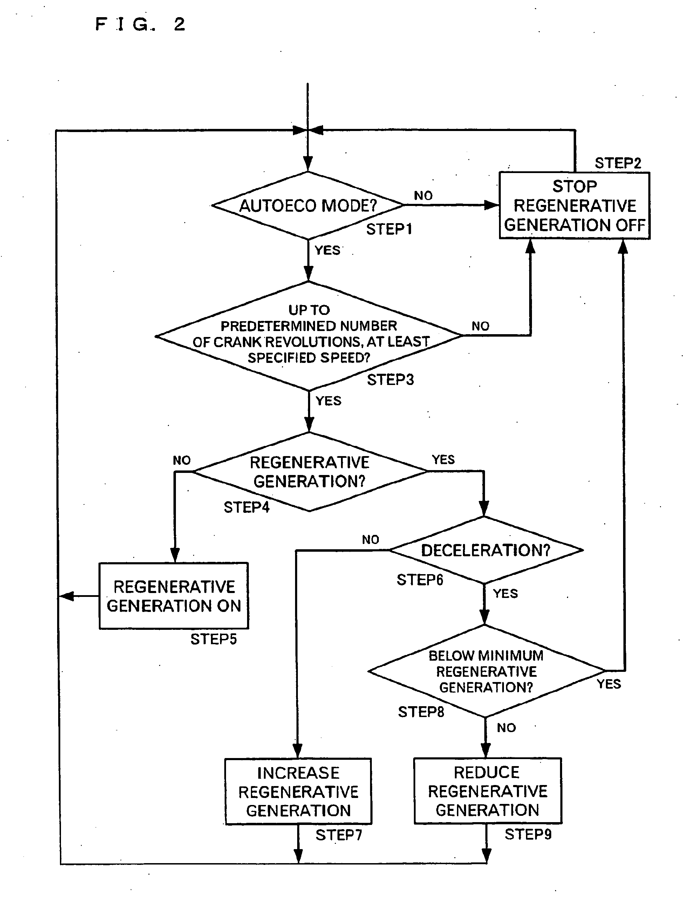

Next, the operation in the "autoeco mode" will be described next with reference to the flow chart of FIG. 2. First, an inquiry is made as to whether the operation mode is the "autoeco mode" (Step 1). If the inquiry is answered in the negative (namely, if the operation is in the "standard mode"), the battery is not charged by regenerative generation (Step 2). When the "autoeco mode" is selected, an inquiry is made as to whether the cranks 6 are in rotation with up to a predetermined number of revolutions, permitting the bicycle to run at not lower than a specified speed (Step 3).

According to the present embodiment, the term the "specified speed" refers to a speed at which a sufficient amount of power can be obtained by regenerative generation. Stated more specifically, this speed is 7 km/h, and the predetermined number of revolutions of the cranks 6 is set at a value slightly lower than is needed for the cranks 6 for running on level roads at that speed.

In the state wherein the cranks are rotating with a number of revolutions smaller than is required of the cranks 6 when the bicycle runs on level loads at the current speed is interpreted to mean a state of running at a speed higher than when the pedals 5 are stepped on for running, namely, the state of running not necessitating pedaling or the state in which the bicycle is braked, like the state of running on a downward slope. In this state, accordingly, regenerative generation is effected as will be described with reference to Steps 4 et seq. Since the state of running on a downward load is detected from the number of revolutions of the cranks 6, the state of running on downward loads can be recognized more accurately than conventionally regardless of the weight of the rider or an article placed on the bicycle.

When the running speed of the bicycle is found to be below the specified speed or the number of revolutions of the cranks 6 is found to be above the predetermined value in Step 3, Step 2 follows, in which no regenerative regeneration is effected. When Step 3 recognizes that the running speed of the bicycle is at least the specified value and that the number of revolutions of the cranks 6 is up to the predetermined value, an inquiry is made as to whether power is produced by regenerative generation (Step 4).

If no power is produced by regenerative generation in Step 4, Step 5 follows for regenerative generation to charge the battery. If Step 4 recognizes regenerative generation, the sequence proceeds to Step 6 to check the bicycle for deceleration. If deceleration is not found in Step 6, Step 7 follows to increase the amount of power to be given by regenerative generation. The increase in the amount of regenerative generation of power affords an increased running distance and a greater amount of braking to thereby suppress an increase in the speed on a downward slope and assure safety and comfort of cycling.

If deceleration is recognized in Step 6, an inquiry is made in Step 8 as to whether the amount of power generated is at least a minimum value. When the amount is found to be less than the minimum in Step 8, Step 2 follows to discontinue regenerative generation for a further reduction in speed. If the amount is found to be not smaller than the minimum, Step 9 follows to diminish regenerative generation. Deceleration due to braking involving regenerative generation is recognized to diminish the amount of braking and thereby ensure comfortable cycling. While the brake is applied, the regenerative generation shown in the flow chart of FIG. 2 is not discontinued, with preference given to the regenerative generation by braking.

According to the present embodiment, an inquiry is made in Step 3 as to whether the bicycle is running at the specified speed, whereas the bicycle may be checked for acceleration.

Further the predetermined number of revolutions of the cranks 6 to be checked in Step 3 is set at a value slightly lower than is needed for the cranks 6 for causing the bicycle to run on a level road at the speed detected by the speed detector, whereas the predetermined value may be set at zero or a value approximate to zero. The instance in which the cranks 6 remain almost unrotated is an instance of braking, an instance of running on a downward slope or an instance of running higher than is needed. Thus, regardless of the running speed, a change-over to regenerative generation is effected by detecting the cranks remaining almost unrotated (i.e., a number of revolutions below the predetermined value), whereby a simplified control mode can be realized.

In this way, regenerative generation of power can be realized reliably, while the amount of power to be generated can be controlled in accordance with the state of running. This results in the advantages of ensuring comfortable running, reducing the frequency of charging the battery and increasing the running distance per charge.

## Claims

1. An electrically assisted bicycle comprising:
- a human power drive mechanism using a human drive force,
- an electric drive mechanism adapted to receive power supplied from a battery (13) for driving a motor (32) with a drive force in accordance with a value detected by a torque detector (41) for detecting human torque of the human power drive mechanism, and
- control means,
the electrically assisted bicycle being **characterized in that** the control means are adapted to cause the electric drive mechanism to effect regenerative generation when cranks (6) of the human power drive mechanism are rotated with a number of revolutions up to a predetermined value.

2. The electrically assisted bicycle according to claim 1 wherein the predetermined value of the number of revolutions of the cranks (6) of the human power drive mechanism is nearly zero.

3. The electrically assisted bicycle according to claim 1, the bicycle being **characterized in that** the bicycle comprises a speed detector (41) for detecting the running speed of the bicycle, the predetermined value of the number of revolutions of the cranks (6) being set at a number of revolutions smaller than is needed for causing the bicycle to run on a level load at the speed detected by the speed detector (40).

4. The electrically assisted bicycle according to claim 1 or 2, the bicycle being **characterized in that** the control means controls the amount of power to be produced by regenerative generation is so controlled that variations in the speed of bicycle are not greater than a specified value.

5. The electrically assisted bicycle according to claim 1 or 2, the bicycle being **characterized in that** the control means controls the amount of power so that the greater the variation in the bicycle speed, the larger the amount of power to be produced by regenerative generation.

6. The electrically assisted bicycle according to claim 1 or 2, the bicycle being **characterized in that** the control means effects regenerative generation when the bicycle speed is not smaller than a predetermined value.

## Patentansprüche

1. Elektrisch unterstütztes Fahrrad, umfassend:
- einen Muskelkraft-Antriebsmechanismus, der eine Muskel-Antriebskraft verwendet,
- einen elektrischen Antriebsmechanismus, der dazu ausgelegt ist, von einer Batterie (13) zugeführte Leistung zu empfangen, um einen Motor (32) mit einer Antriebskraft in Übereinstimmung mit einem Wert anzutreiben, der von einem Drehmomentdetektor (41) zum Detektieren eines Muskel-Drehmoments des Muskelkraft-Antriebsmechanismus detektiert wird, und
- Steuermittel,
wobei das elektrisch unterstützte Fahrrad **dadurch gekennzeichnet ist, dass** die Steuermittel dazu ausgelegt sind, den elektrischen Antriebsmechanismus zu veranlassen, eine regenerative Erzeugung zu bewerkstelligen, wenn Kurbeln (6) des Muskelkraft-Antriebsmechanismus mit einer Drehzahl bis zu einem vorgegebenen Wert gedreht werden.

2. Elektrisch unterstütztes Fahrrad nach Anspruch 1, wobei der vorgegebene Wert der Drehzahl der Kurbeln (6) des Muskelkraft-Antriebsmechanismus ungefähr null ist.

3. Elektrisch unterstütztes Fahrrad nach Anspruch 1, wobei das Fahrrad **dadurch gekennzeichnet ist, dass** das Fahrrad einen Geschwindigkeitsdetektor (41) umfasst, um die Fahrgeschwindigkeit des Fahrrads zu detektieren, wobei der vorgegebene Wert der Drehzahl der Kurbeln (6) auf eine Drehzahl eingestellt ist, die kleiner ist als jene, die erforderlich ist, um das Fahrrad zu veranlassen, unter Grenzlast mit der durch den Geschwindigkeitsdetektor (40) detektierten Geschwindigkeit zu fahren.

4. Elektrisch unterstütztes Fahrrad nach Anspruch 1 oder 2, wobei das Fahrrad **dadurch gekennzeichnet ist, dass** die Steuermittel den durch regenerative Erzeugung zu erzeugenden Leistungsbetrag in der Weise steuern, dass Schwankungen der Geschwindigkeit des Fahrzeugs nicht größer als ein bestimmter Wert sind.

5. Elektrisch unterstütztes Fahrrad nach Anspruch 1 oder 2, wobei das Fahrrad **dadurch gekennzeichnet ist, dass** die Steuermittel den Leistungsbetrag in der Weise steuern, dass der Leistungsbetrag, der durch die regenerative Erzeugung erzeugt werden soll, umso größer ist, je größer die Schwankung der Fahrradgeschwindigkeit ist.

6. Elektrisch unterstütztes Fahrrad nach Anspruch 1 oder 2, wobei das Fahrrad **dadurch gekennzeichnet ist, dass** die Steuermittel eine regenerative Erzeugung bewerkstelligen, wenn die Fahrradgeschwindigkeit nicht kleiner als ein vorgegebener Wert ist.

## Revendications

1. Bicyclette à assistance électrique, comprenant :
- un mécanisme d'entraînement à puissance humaine utilisant une force d'entraînement humaine,
- un mécanisme d'entraînement électrique adapté à recevoir une puissance fournie depuis une batterie (13) pour entraîner un moteur (32) avec une force d'entraînement en accord avec une valeur détectée par un détecteur de couple (41) pour détecter le couple humain du mécanisme d'entraînement à puissance humaine, et
- des moyens de commande,
la bicyclette à assistance électrique étant **caractérisée en ce que** les moyens de commande sont adaptés à amener le mécanisme d'entraînement électrique à effectuer une génération régénérative quand les manivelles (16) du mécanisme d'entraînement à puissance humaine sont mises en rotation avec un nombre de révolutions jusqu'à une valeur prédéterminée.

2. Bicyclette à assistance électrique selon la revendication 1, dans laquelle la valeur prédéterminée du nombre de révolutions des manivelles (6) du mécanisme d'entraînement à puissance humaine est pratiquement égale à zéro.

3. Bicyclette à assistance électrique selon la revendication 1, la bicyclette étant **caractérisée en ce qu'**elle comprend un détecteur de vitesse (41) pour détecter la vitesse de roulement de la bicyclette, la valeur prédéterminée du nombre de révolutions des manivelles (6) étant fixée à un nombre de révolutions inférieur à celui qui est nécessaire pour amener la bicyclette à circuler sur une route plane à la vitesse détectée par le détecteur de vitesse (40).

4. Bicyclette à assistance électrique selon la revendication 1 ou 2, la bicyclette étant **caractérisée en ce que** les moyens de commande commandent la quantité de puissance à produire par génération régénérative d'une telle manière que les variations de la vitesse de la bicyclette ne sont pas supérieures à une valeur spécifiée.

5. Bicyclette à assistance électrique selon la revendication 1 ou 2, la bicyclette étant **caractérisée en ce que** les moyens de commande commandent la quantité de puissance de telle façon que plus la variation de la vitesse de la bicyclette est forte plus importante sera la quantité de puissance à produire par la génération régénérative.

6. Bicyclette à assistance électrique selon la revendication 1 ou 2, la bicyclette étant **caractérisée en ce que** les moyens de commande effectuent une génération régénérative quand la vitesse de la bicyclette n'est pas inférieure à une valeur prédéterminée.
